# FASCICULE DE BREVET EUROPEEN

(11) **EP 1 101 048 B1**
(45) Date de publication et mention de la délivrance du brevet: **16.10.2002**
(21) Numéro de dépôt: 99932973.3
(22) Date de dépôt: 26.07.1999
(51) Int. Cl.: F16G 11/04

(54) **PIECE MONOBLOC POUR LA REALISATION D'UN MORS D'ANCRAGE DE CABLE, ET PROCEDE DE FABRICATION D'UN TEL MORS**
EINTEILIGES ELEMENT FÜR DIE HERSTELLUNG EINER SEILVERANKERUNGSKLEMME UND HERSTELLUNGSVERFAHREN EINER SOLCHEN KLEMME
SINGLE-PIECE PART FOR MAKING A CABLE ANCHORING JAW, AND METHOD FOR MAKING SUCH A JAW

(30) Priorité: 28.07.1998 FR 9809664
(43) Date de publication de la demande: 23.05.2001
(73) Titulaire: FREYSSINET INTERNATIONAL STUP, 78140 Vélizy Cedex (FR)
(72) Inventeur: PERCHERON, Jean-Claude, F-95510 Vienne-en-Arthies (FR); PELTIER, Manuel, F-75017 Paris (FR)
(74) Mandataire: Loisel, Bertrand
(86) Numéro de dépôt international: FR9901830
(87) Numéro de publication internationale: WO00006925

(56) Documents cités:
- FR-A- 2 586 076

## Description

La présente invention concerne les mors destinés à ancrer sur des blocs de retenue des câbles tels que des câbles de précontrainte d'ouvrages de construction, des haubans de pont...

Ces mors ont habituellement une forme tronconique, et ils sont pourvus d'un canal axial de forme générale cylindrique recevant le brin de câble à ancrer. Ils coopèrent avec des logements présentant au moins une portion tronconique complémentaire, logements évidés de part en part dans les blocs de retenue et traversés par les brins de câble à ancrer.

Les mors en question sont composés de plusieurs (le plus souvent deux, trois ou quatre) éléments identiques - appelés « clavettes » ci-après - provenant d'une pièce d'origine délimitée extérieurement par une surface tronconique et évidée par un canal axial cylindrique dont la face intérieure est avantageusement striée. La pièce d'origine est décomposée en clavettes par sciage selon deux, trois ou quatre demi-plans radiaux (ou plus).

Les clavettes obtenues par sciage sont soumises à un traitement thermique de durcissement superficiel. Un jonc annulaire en acier est logé dans une gorge circulaire, usinée sur la face tronconique externe de la pièce d'origine, au voisinage de sa grande base, afin d'assembler les clavettes du mors.

Le brevet français 2 586 076 décrit un mors d'ancrage composé de clavettes provenant toutes de la même pièce d'origine. Les sciages destinés à décomposer cette pièce en clavettes demeurent volontairement incomplets de façon à laisser subsister des pontets de liaison de faible épaisseur entre les clavettes contiguës le long du canal central de la pièce.

Cette façon de réaliser le mors convient bien à des fabrications en grande série. Même si les découpes des clavettes ne sont pas strictement régulières et identiques, on est assuré que leur assemblage dans le mors ne provoque pas entre les clavettes d'appui sur des faces non complémentaires qui risqueraient de déformer le canal cylindrique dans lequel le brin est agrippé. Les tolérances de fabrication, et les contrôles de qualité, sont donc moins sévères que lorsque les sciages sont complets et les clavettes stockées en vrac entre la découpe et l'assemblage.

Une vue d'extrémité de la pièce monobloc 1 à partir de laquelle est fabriqué un mors à trois clavettes 9 selon le brevet français 2 586 076 est représentée sur la figure 1. Les pontets 7, adjacents au canal cylindrique 3, sont situés au fond de fentes radiales 6 résultant des sciages effectués depuis la périphérie de la pièce 1 sur toute sa longueur. Les pontets sont de faible épaisseur (moins de 1 mm), leur fonction étant essentiellement de tenir les clavettes 9 entre elles avant qu'ils soient rompus. Pour effectuer cette rupture, la méthode habituelle est d'enfoncer un organe écarteur dans le canal 3, le jonc d'assemblage maintenant ensuite les clavettes désolidarisées.

Un problème rencontré avec les mors de ce type est qu'on ne maîtrise pas comment s'effectue la rupture des pontets. Le fond de la fente 6 est plat, de sorte que la rupture du pontet peut avoir lieu pratiquement en tout point le long de l'épaisseur de la fente (direction perpendiculaire au plan radial). La rupture peut être en zigzag du fait des stries transversales 4 formées par taraudage sur la paroi du canal cylindrique 3. En outre, le pontet 7 se rompt souvent en plusieurs endroits.

Ces problèmes peuvent nuire à la qualité de l'ancrage. Si un morceau de pontet demeure sur la face radiale d'une clavette en certains points seulement de la longueur du mors, il peut en résulter, du fait de l'appui imparfait entre clavettes voisines, une déformation du canal cylindrique qui affecte la régularité du serrage. Des morceaux du pontet peuvent encore se déformer ou se séparer de la clavette sous l'effet des contraintes exercées au moment de la réalisation de l'ancrage, ces morceaux étant alors susceptibles de s'intercaler de façon indésirable entre les clavettes, entre les clavettes et le brin de câble ou encore entre les clavettes et l'orifice tronconique du bloc de retenue.

Il est à noter que, pour serrer le brin de manière homogène, on donne à son canal cylindrique un diamètre légèrement inférieur à celui du brin de câble à ancrer. Ainsi, après une certaine pénétration des stries du mors dans le métal du brin et une légère contraction radiale du brin sous l'effet de la contrainte de serrage, le canal retrouve approximativement sa forme cylindrique afin que la contrainte soit transmise de manière homogène sur le périmètre du brin.

Les sciages effectués entre les clavettes laissent entre elles des intervalles nécessaires à la transmission de l'effort de serrage. En l'absence de ces intervalles, le serrage radial exercé au niveau de l'interface tronconique se traduirait par un serrage des clavettes les unes sur les autres au niveau des plans radiaux, plutôt que par la transmission du serrage au brin.

Il convient d'éviter qu'au moment de réaliser l'ancrage certains de ces intervalles se réduisent tandis que d'autres s'élargissent. En effet, ceci se traduirait, dans le pire des cas pour un mors à N clavettes, par la suppression de N-1 des intervalles et par la formation d'un intervalle d'épaisseur N fois plus grande. Ceci provoquerait également un serrage inefficace du brin, susceptible d'entraîner des glissements. Dans le cas typique où N=3 et où les découpes laissent des intervalles de 1,5 mm entre les clavettes, on peut se retrouver avec un intervalle de 4,5 mm qui perturbe fortement l'ancrage d'un toron classique à sept fils dont les fils périphériques ont un diamètre de 5 mm.

Le fait de mal maîtriser les ruptures des pontets ne permet pas d'éliminer cet inconvénient des mors traditionnels.

Un but de la présente invention est de perfectionner les mors du type décrit dans le brevet français 2 586 076 en limitant l'incidence des problèmes mentionnés ci-dessus.

L'invention propose ainsi une pièce monobloc pour la réalisation d'un mors d'ancrage de câble, comprenant plusieurs secteurs angulaires agencés autour d'un canal de forme générale cylindrique, réunis par des pontets adjacents audit canal, chaque pontet étant situé au fond d'une fente radiale respective s'étendant entre deux des secteurs depuis la périphérie de la pièce. Suivant l'invention, chaque pontet présente vers sa fente respective une surface dont une partie au moins est inclinée par rapport à la direction perpendiculaire au plan radial de ladite fente, de façon que l'épaisseur radiale dudit pontet présente un minimum en une position déterminée suivant ladite direction.

Au moment de scinder la pièce monobloc pour obtenir les clavettes correspondant aux secteurs angulaires, les pontets sont rompus préférentiellement à l'endroit où leur épaisseur présente un minimum, c'est à dire à un endroit qu'on peut maîtriser en utilisant un outil de découpe approprié pour former les fentes radiales dans la pièce.

Il en résulte une meilleure répartition des efforts de serrage sur la périphérie de la pièce au travers de la surface de serrage interne au pontet.

Les rebords que les pontets rompus laissent sur les faces radiales des clavettes au bord du canal cylindrique du mors ont une forme bien déterminée, et ils peuvent participer à la transmission des efforts au brin de câble. En utilisant ainsi toute la largeur du secteur angulaire, la répartition des efforts est également améliorée (les pressions crête sont diminuées).

En outre, ces rebords éliminent pratiquement les problèmes précités d'élargissement excessif d'un des intervalles entre clavettes.

Dans un mode de réalisation avantageux, la surface que présente chaque pontet vers sa fente respective est sensiblement en forme de V. L'inclinaison des faces du V permet alors de transférer les efforts de serrage sur la totalité de la surface des stries généralement présentes sur la paroi du canal cylindrique, de manière à augmenter de façon significative la régularité du serrage sur chacun des fils constituant le brin ou toron ancré. L'inclinaison des faces du V permet en outre une mise en place des secteurs de clavettes de manière régulièrement espacée par le glissement normal radial du secteur de clavette sur les parties du V.

Selon un autre aspect, l'invention propose un procédé de fabrication d'un mors d'ancrage de câble formé d'un assemblage d'un nombre N de clavettes, dans lequel :
- on forme un canal de forme générale cylindrique dans une pièce monobloc ;
- on effectue N découpes dans la pièce monobloc depuis sa périphérie suivant des plans radiaux, pour former N fentes radiales délimitant N secteurs angulaires de la pièce, N-1 au moins des découpes étant interrompues avant d'atteindre le canal afin de laisser subsister au fond des fentes correspondantes des pontets réunissant les secteurs ;
- on soumet la pièce ainsi obtenue à un traitement de durcissement ; et
- on force la désolidarisation des N secteurs afin de rompre les pontets, chaque clavette du mors étant obtenue à partir de l'un des secteurs.

Les découpes interrompues sont effectuées de manière à conférer à chaque pontet une surface, dirigée vers la fente correspondante, dont une partie au moins est inclinée par rapport à la direction perpendiculaire au plan radial de ladite fente, de façon que ledit pontet soit rompu en une position déterminée suivant ladite direction.

D'autres particularités et avantages de la présente invention apparaîtront dans la description ci-après d'exemples de réalisation non limitatifs, en référence aux dessins annexés, dans lesquels :
- la figure 1, précédemment commentée, est une vue d'extrémité d'une pièce d'ébauche d'un mors d'ancrage selon le brevet français 2 586 076 ;
- la figure 2 est un schéma en perspective d'un mors d'ancrage réalisé conformément à la présente invention ;
- la figure 3 est une vue d'extrémité d'une pièce d'ébauche d'un mors du type de la figure 2.

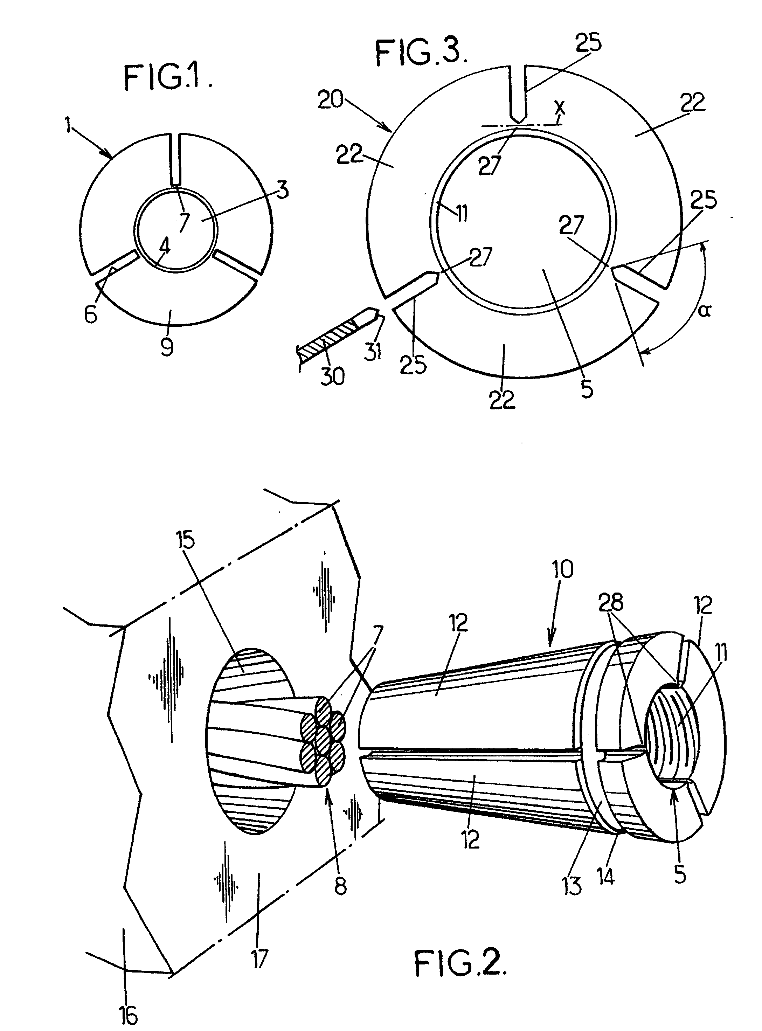

La figure 2 montre la forme d'un mors d'ancrage 10 conforme à l'invention, utilisé pour bloquer un brin de câble 8 tel que par exemple un toron de précontrainte ou encore un toron de hauban. Cet exemple de mors 10 a une forme générale tronconique, avec un alésage central cylindrique 5, destiné à être traversé par le toron 8, dont la paroi interne comporte des stries transversales 11 pour bien agripper le toron. Cette forme tronconique est divisée en trois secteurs de 120 degrés constitués par trois clavettes identiques 12. Ces clavettes 12 sont assemblées à l'aide d'un jonc annualaire 13 logé dans une gorge circonférentielle 14 voisine de l'extrémité la plus large du mors.

Ce mors 10 vient s'engager dans un orifice tronconique complémentaire 15 prévu dans un bloc d'ancrage 16. Pour réaliser l'ancrage d'un toron, on procède de la façon suivante : le toron 8 est enfilé à travers l'orifice 15 ; on place le mors 10 autour de ce toron ; on exerce une traction sur le toron dans sa partie dépassant de la face extérieure 17 du bloc d'ancrage 16, par exemple à l'aide d'un vérin ; et on enfonce le mors 10 autour du toron dans l'orifice tronconique 15. Après relâchement de l'effort de traction, le mors 10 bloque fermement le toron 8 dans le bloc 16.

Comme le montre la figure 2, le toron 8 peut être constitué de sept fils métalliques 7 torsadés entre eux.

Pour réaliser un tel mors 10, on part d'une façon connue en soi d'une pièce monobloc délimitée extérieurement par une surface tronconique. Dans cette pièce tronconique, on perce un canal cylindrique axial 5. La figure 3 montre une telle pièce 20.

La surface interne du canal 5 est striée transversalement, par exemple selon un filet hélicoïdal à section triangulaire formé par taraudage, qui produira les stries 11 sur les faces internes des clavettes 12. La gorge annulaire 14, non visible sur la figure 3 est usinée sur la face tronconique de la pièce 20 au voisinage de sa grande base.

La pièce 20 en question est avantageusement constituée en un acier doux facilement usinable mais susceptible d'être durci superficiellement par un traitement thermique tel qu'une cémentation.

C'est dans cette pièce 20 que sont pratiquées par sciage les fentes radiales 25 s'étendant selon des plans passant par l'axe de la pièce et délimitant les secteurs angulaires 22 qui constitueront les clavettes 12 du mors.

Dans le mode de réalisation illustré, le nombre N de fentes 25 est de trois, de sorte qu'elles sont espacées angulairement de 120° autour de l'axe du canal. L'épaisseur de ces fentes, déterminée par celle de l'outil de découpe 30 employé pour les réaliser, est par exemple de 1,5 mm. Les fentes 25 ne traversent pas le matériau de la pièce 20 jusqu'au canal 5 : chacune d'elles est interrompue de façon à laisser subsister un pontet 27 le long du canal 5 un pontet 27.

Comme le montre la figure 3, le fond de chaque fente 25 est en forme de V pointant vers l'axe de la pièce 20, c'est-à-dire vers le canal 5. Pour réaliser ceci, l'outil de découpe employé, tel qu'une fraise ou une scie circulaire 30, présente sur son bord actif des dents 31 à profil sensiblement en V perpendiculairement au plan de coupe, c'est-à-dire des dents 31 dont la forme en pointe est complémentaire de la forme en V désirée du fond de la fente 25.

La forme en V du fond de la fente 25 permet de contrôler à quel endroit le pontet 27 se rompra au moment de désolidariser les clavettes 12. Le pontet 27 se rompra préférentiellement au niveau de la pointe du V, c'est-à-dire approximativement au milieu de l'épaisseur de la fente 25.

Dans une autre réalisation, le fond de la fente 25 pourrait avoir une forme effilée autre qu'un profil en V. Ce qui importe est que cette forme soit telle qu'une partie au moins de la surface du pontet dirigée vers la fente soit inclinée par rapport à la direction X perpendiculaire au plan radial de ladite fente, de façon que l'épaisseur radiale dudit pontet présente un minimum en une position déterminée suivant cette direction X. C'est au niveau de ce minimum qu'aura lieu la rupture. L'avantage de la forme en V est sa commodité de réalisation.

A titre d'exemple, on peut prévoir que l'épaisseur du pontet, mesurée entre la pointe du V et la paroi du canal 5, soit comprise entre 0,8 mm (au niveau du fond des stries 11) et 1,3 mm (au niveau du sommet des stries 11), l'angle α entre les deux faces inclinées du V étant par exemple de 90°.

Il est à noter que, malgré la finesse de l'épaisseur et de la forme de la fente 25, il est relativement facile de régler le sciage en conséquence puisque les trois fentes peut être exécutées simultanément à l'aide de trois outils minces dont les dimensions et positions respectives sont rigoureusement déterminées et entre lesquelles la pièce 20 est forcée axialement.

La pièce d'ébauche de mors ainsi tailladée demeure constituée d'un seul bloc et peut être mélangée en vrac à d'autres pièces semblables.

Les sollicitations exercées sur les pontets 27 à ce stade sont en effet très inférieures à celles qui seraient nécessaires pour les rompre. Les pontets n'ont pas encore été fragilisés par cémentation et ont alors essentiellement pour fonction de conserver une liaison entre les secteurs 22 correspondant aux clavettes 12.

On reprend ensuite une à une les pièces monobloc 20 qui ne sont pas encore divisées en clavettes distinctes, de façon à placer le jonc d'assemblage 13 dans chaque gorge 14, jonc généralement constitué en acier à ressort.

On fait alors subir à l'ensemble le traitement de cémentation qui conduit au durcissement superficiel des clavettes 12 et des pontets 27.

Ce traitement peut être un chauffage à une température comprise entre 900 et 1000°C, réalisé pendant trois quarts d'heure dans une atmosphère carburante, chauffage suivi d'une trempe.

L'acier ainsi traité est alors devenu superficiellement très dur, et les pontets 27 sont devenus relativement fragiles et cassants.

La simple prise en mains de l'ensemble à ce stade peut suffire pour casser les pontets 7. Sinon, on dispose un organe écarteur à l'embouchure du canal 5, et on rompt les pontets en percutant cet organe. Les clavettes 12 du mors sont alors désolidarisées les unes des autres, en restant attachées par le jonc 13.

Comme le montre la figure 2, les pontets rompus laissent sur la faces radiales de chaque clavette des rebords 28 à section approximativement triangulaire. Ces rebords 28 sont adjacents au canal 5 dans lequel le mors serre le toron 8. Ils participent ainsi à la transmission des efforts de serrage au toron, en empêchant que l'effort de serrage du toron diminue sur un intervalle trop large entre les clavettes. Corrélativement, les pressions crête exercées sur le toron s'en trouvent diminuées.

Les rebords 28 évitent en outre qu'au cours de la réalisation de l'ancrage, certains des intervalles entre clavettes aient tendance à se rétrécir en occasionnant l'élargissement d'un autre intervalle.

Un certain nombre de variantes peuvent être apportées au mode de réalisation décrit sans sortir du cadre de la présente invention, par exemple :
- le nombre N de clavettes pourrait être différent de trois ;
- la périphérie du mors pourrait ne pas être simplement tronconique ; elle pourrait être composée de plusieurs tronçons tronconiques successifs ou encore être galbée ;
- l'une des N découpes effectuées dans la pièce 20 pourrait être complète, la pièce restant monobloc avec seulement N-1 pontets ;
- l'ordre d'exécution de certaines étapes du procédé de fabrication du mors d'ancrage pourrait être modifié.

## Revendications

1. Pièce monobloc (20) pour la réalisation d'un mors d'ancrage de câble (10), comprenant plusieurs secteurs angulaires (22) agencés autour d'un canal de forme générale cylindrique (5), réunis par des pontets (27) adjacents audit canal, chaque pontet étant situé au fond d'une fente radiale respective (25) s'étendant entre deux des secteurs depuis la périphérie de la pièce, **caractérisé en ce que** chaque pontet présente vers sa fente respective une surface dont une partie au moins est inclinée par rapport à la direction (X) perpendiculaire au plan radial de ladite fente, de façon que l'épaisseur radiale dudit pontet (27) présente un minimum en une position déterminée suivant ladite direction (X).

2. Pièce monobloc selon la revendication 1, dans laquelle la surface que présente chaque pontet (27) vers sa fente respective (25) est sensiblement en forme de V.

3. Procédé de fabrication d'un mors d'ancrage de câble (10) formé d'un assemblage d'un nombre N de clavettes (12), dans lequel :
- on forme un canal (5) de forme générale cylindrique dans une pièce monobloc ;
- on effectue N découpes dans la pièce monobloc depuis sa périphérie suivant des plans radiaux, pour former N fentes radiales (25) délimitant N secteurs angulaires (22) de la pièce, N-1 au moins des découpes étant interrompues avant d'atteindre le canal (5) afin de laisser subsister au fond des fentes correspondantes des pontets (27) réunissant les secteurs ;
- on soumet la pièce (20) ainsi obtenue à un traitement de durcissement ; et
- on force la désolidarisation des N secteurs afin de rompre les pontets, chaque clavette (12) du mors étant obtenue à partir de l'un des secteurs (22),
**caractérisé en ce que** lesdites découpes interrompues sont effectuées de manière à conférer à chaque pontet (27) une surface, dirigée vers la fente correspondante, dont une partie au moins est inclinée par rapport à la direction (X) perpendiculaire au plan radial de ladite fente, de façon que ledit pontet soit rompu en une position déterminée suivant ladite direction (X).

4. Procédé selon la revendication 3, dans lequel on effectue lesdites N-1 découpes au moins au moyen d'un ou plusieurs outils (30) ayant des dents (31) à profil sensiblement en V perpendiculairement au plan de coupe.

5. Procédé selon la revendication 3 ou 4, dans lequel on taraude le canal de forme générale cylindrique (5) pour former des stries transversales (11) sur une face interne de chaque clavette (12).

6. Procédé selon l'une quelconque des revendications 3 à 5, dans lequel on forme une gorge annulaire (14) sur la périphérie de la pièce monobloc (20), et on engage un jonc d'assemblage (13) dans cette gorge avant de procéder au traitement de durcissement.

7. Mors d'ancrage de câble (10), formé d'un assemblage de plusieurs clavettes (12), obtenu par un procédé selon l'une quelconque des revendications 3 à 6.

## Patentansprüche

1. Einteiliges Element (20) für die Herstellung einer Seilverankerungsklemme (10), umfassend mehrere winklige Sektoren (22), die um einen Kanal von allgemein zylindrischer Form (5) herum angeordnet sind und durch dem Kanal benachbarte Brücken (27) verbunden sind, wobei jede Brücke am Grund eines entsprechenden radialen Schlitzes (25) angeordnet ist, der sich zwischen zwei Sektoren von dem Umfang des Elements ausgehend erstreckt, **dadurch gekennzeichnet, dass** jede Brücke zum entsprechenden Schlitz hin eine Oberfläche aufweist, die wenigstens teilweise bezüglich der zur radialen Ebene des Schlitzes senkrecht stehenden Richtung (X) geneigt ist, so dass die radiale Dicke der Brücke (27) an einer bestimmten Position in der Richtung (X) ein Minimum aufweist.

2. Einteiliges Element nach Anspruch 1, bei dem die von jeder Brücke (27) zum entsprechenden Schlitz (25) hin aufgewiesene Oberfläche deutlich in Form eines V gebildet ist.

3. Verfahren zum Herstellen einer Seilverankerungsklemme (10), gebildet aus dem Zusammenbau einer Anzahl N von Keilen (12), bei dem:
- ein Kanal (5) von allgemein zylindrischer Form in einem einteiligen Element gebildet ist;
- N Einschnitte in das einteilige Element von seinem Umfang ausgehend entsprechend radialen Ebenen ausgeführt sind, um N radiale Schlitze (25) zu bilden, die N winklige Sektoren (22) des Elements abgrenzen, wobei wenigstens N-1 der Einschnitte vor Erreichen des Kanals (5) unterbrochen werden, um am Grund der entsprechenden Schlitze Brücken (27) stehen zu lassen, die die Sektoren verbinden;
- das so erhaltene Element (20) einer Härtungsbehandlung unterzogen wird, und
- die Trennung der N Sektoren erzwungen wird, um die Brücken zu brechen, wobei jeder Keil (12) der Klemme von einem Sektor (22) ausgehend erhalten wird, **dadurch gekennzeichnet, dass** die unterbrochenen Einschnitte so ausgeführt sind, dass jede Brücke (27) eine dem entsprechenden Schlitz zugewandte Oberfläche erhält, die wenigstens teilweise bezüglich der zur radialen Ebene des Schlitzes senkrecht stehenden Richtung (X) geneigt ist, so dass die Brücke in einer bestimmten Stellung gemäß der Richtung (X) bricht.

4. Verfahren nach Anspruch 3, bei dem die N-1 Einschnitte wenigstens mittels eines oder mehrerer Zähne (31) aufweisender Werkzeuge (30) mit einem deutlich V-förmigen Profil senkrecht zur Schnittebene ausgeführt werden.

5. Verfahren nach Anspruch 3 oder 4, bei dem in den allgemein zylindrischen Kanal (5) ein Gewinde geschnitten wird, um quer verlaufende Rillen (11) auf einer inneren Fläche jedes Keils (12) zu bilden.

6. Verfahren nach einem der Ansprüche 3-5, bei dem eine ringförmige Rille (14) auf dem Umfang des einteiligen Elements (20) gebildet ist und ein Montagering (13) vor Durchführung der Härtungsbehandlung in dieser Rille angeordnet wird.

7. Seilverankerungsklemme (10), gebildet durch Zusammenfügen mehrerer Keile (12), erhalten durch ein Verfahren nach einem der Ansprüche 3 bis 6.

## Claims

1. A single-piece component (20) for making a cable anchoring jaw (10), comprising several angular segments (22) disposed around a bore (5) having a generally cylindrical shape, joined by bridges (27) adjacent to said bore, each bridge being located at the bottom of a respective radial slot (25) extending between two segments from the periphery of the component, **characterised in that** each bridge presents, towards its respective slot, a surface having at least a portion inclined relative to the direction (X) perpendicular to the radial plane of said slot so that the radial thickness of said bridge (27) is at a minimum at a determined position along said direction (X).

2. A single-piece component as claimed in claim 1, wherein the surface that each bridge (27) presents towards its respective slot (25) is substantially V-shaped.

3. A method of manufacturing a cable anchoring jaw (10) formed of an assembly of a number N of wedges (12), comprising the steps of:
- forming a bore (5) of a generally cylindrical shape in a single-piece component;
- performing N cuts in the single-piece component from its periphery along radial planes to form N radial slots (25) delimiting N angular segments (22) of the component, at least N-1 of the cuts being interrupted before reaching the bore (5) in order to leave bridges (27) joining the segments at the bottom of the corresponding slots;
- subjecting the component (20) thus obtained to a hardening treatment; and
- forcing apart the N sectors in order to break the bridges, each wedge (12) of the jaw being obtained from one of the segments (22),
**characterised in that** said interrupted cuts are performed so as to impart to each bridge (27) a surface, directed towards the corresponding slot, of which at least part is inclined relative to the direction (X) perpendicular to the radial plane of said slot so that said bridge breaks at a determined position along said direction (X).

4. A method as claimed in claim 3, wherein said N-1 cuts are made by means of one or more tools (30) having teeth (31) with a substantially V-shaped profile perpendicular to the cutting plane.

5. A method as claimed in claim 3 or 4, further comprising the step of tapping the generally cylindrical bore (5) to form transverse striations (11) on an internal face of each wedge (12).

6. A method as claimed in any one of claims 3 to 5, further comprising the steps of forming an annular groove (14) on the periphery of the single-piece component (20) and placing an assembling ring (13) in said groove prior to the hardening treatment.

7. A cable anchoring jaw (10) formed by assembling several wedges (12) obtained by a method as claimed in any one of claims 3 to 6.
